Europäisches Patentamt

European Patent Office

Office européen des brevets

(11) Numéro de publication: **0 310 464 B1**

(12) **FASCICULE DE BREVET EUROPEEN**

(45) Date de publication de fascicule du brevet: **11.05.94** (51) Int. Cl.⁵: **H04N 1/387**

(21) Numéro de dépôt: **88402051.2**

(22) Date de dépôt: **05.08.88**

(54) Procédé d'archivage de cartes géographiques et procédé de lecture des cartes archivées.

(30) Priorité: **07.08.87 FR 8711267**

(43) Date de publication de la demande:
**05.04.89 Bulletin 89/14**

(45) Mention de la délivrance du brevet:
**11.05.94 Bulletin 94/19**

(84) Etats contractants désignés:
**AT BE CH DE ES FR GB GR IT LI NL**

(56) Documents cités:
**EP-A- 0 106 291      EP-A- 0 109 038**
**EP-A- 0 141 508      EP-A- 0 177 372**
**WO-A-83/03516      GB-A- 2 144 293**

(73) Titulaire: **SOCIETE D'APPLICATIONS GENERA-
LES D'ELECTRICITE ET DE MECANIOUE SA-
GEM
6, Avenue d'Iéna
F-75783 Paris Cédex 16(FR)**

(72) Inventeur: **Dedieu, Christian
35 Square de la Belle-Epine
F-95650 Puiseux Pontoise(FR)**
Inventeur: **Attard, Georges
16 Allée des Trompettes
F-95000 Jouy le Moutier(FR)**
Inventeur: **Bouthors, Sylvie
1 rue du Passeur d'Etoiles
F-95800 Cergy Saint Christophe(FR)**
Inventeur: **Cabot, Jean-Paul
111 rue Paul Déroulède
F-92270 Bois-Colombes(FR)**
Inventeur: **Grand, Elie**

**F-38790 Saint Georges d'Esperanche(FR)**

(74) Mandataire: **Bloch, Gérard et al
2, square de l'Avenue du Bois
F-75116 Paris (FR)**

Rank Xerox (UK) Business Services
(3.10/3.09/3.3.3)

EP 0 310 464 B1

**Description**

L'archivage de cartes géographiques implique d'en avoir au préalable saisi les nombreuses informations - ce sont elles qui sont à archiver - pour, après, pouvoir relire ces informations. Un tel archivage doit être particulièrement utile, notamment dans le domaine de la navigation, aérienne, maritime ou même terrestre, par exemple au moment de la préparation d'une mission, pour appréhender rapidement tout aussi bien un vaste secteur géographique que des parties de ce secteur. L'archivage doit présenter également l'avantage de pouvoir "lire" les informations stockées en combinaison avec d'autres, comme des plans de vol, des trajectoires à suivre, des objectifs à atteindre, superposées aux premières.

Bref, l'archivage doit présenter l'avantage de pouvoir s'affranchir d'un espace encombrant de stockage de cartes.

Les moyens actuellement disponibles pour l'archivage de cartes sont essentiellement photographiques, (production de films) et mécaniques (déroulage des films).

Compte-tenu de la lourdeur de ces moyens, les avantages que devrait procurer l'archivage ne le sont pas.

La présente invention vise donc à proposer un procédé d'archivage approprié.

Avant d'introduire l'invention, quelques explications seront développées.

Considérons un secteur géographique. Ce secteur peut être découpé en zones géographiques appelées zones "échelle", chacune définie par un méridien de référence. Chaque zone échelle recouvre en fait une pluralité de cartes géographiques, à une échelle donnée. Chaque carte, du type par exemple de celles éditées par l'Institut Géographique National, contient des informations inscrites dans un trapèze curviligne à bords latéraux rectilignes (les méridiens)extrêmes mais non parallèles au méridien de référence de la zone échelle, souvent le méridien central d'une des cartes. Juxtaposer ces cartes deux à deux par deux de leurs bords latéraux ou méridiens extrêmes respectifs, c'est-à-dire superposer ces deux bords ou méridiens, exige au préalable d'avoir fait tourner l'une des deux cartes considérées par rapport à l'autre. Si $\alpha$ et $\beta$ sont respectivement les angles formés entre le méridien extrême gauche et les bords parallèles d'une carte, d'une part, et entre ces bords de carte et le méridien extrême droit, d'autre part, et en affectant l'indice i aux informations de la carte i, l'angle de rotation dont il faut faire tourner la carte i + 1 par rapport à la carte i, pour superposer le méridien extrême gauche de la première et le méridien extrême droit de la seconde, est $\gamma_{i+1} = \alpha_{i+1} + \beta_i$.

$\gamma_{i+1}$ étant un angle de numérisation possible de la carte i + 1.

Les informations d'une carte sont les couleurs des pixels (picture elements, ou éléments d'image) qui la composent. Numériser une carte, c'est former, par balayage à l'aide d'un scanner, la matrice des couples (pixel-couleur), chaque couleur, déterminée par ses coordonnées colorimétriques dans le repère des trois couleurs primaires, étant l'une de celles, en nombre limité, d'une table de couleurs composée préalablement par échantillonnage avec la participation d'un opérateur.

Les cartes constitutives d'une zone échelle contiennent des informations inutiles et qu'il convient donc d'éliminer ou de découper, comme par exemple les bordures blanches des légendes. La numérisation d'un seul encadré rapporté sur une carte revient ainsi à éliminer tout ce qui est à l'extérieur de l'encadré.

Pour cela, on associe à chaque pixel à éliminer, manuellement par l'opérateur à l'aide d'un curseur, ou semi-automatiquement, l'information de couleur zéro.

Ces explications liminaires étant fournies, l'invention peut maintenant être présentée.

La présente invention concerne donc un procédé d'archivage de cartes géographiques recouvrant au moins une zone échelle déterminée, caractérisé par le fait que, successivement, on ordonne les cartes, en les disposant les unes à côté des autres, pour constituer la zone échelle, et en les numérotant, on fait tourner chaque carte d'un angle dit de numérisation formé entre un méridien de référence de la zone échelle et le méridien central de la carte considéré,

on numérise les pixels de chaque carte ainsi ordonnée et tournée,

on découpe, de chaque carte, les portions inutiles,

on procède, pour s'affranchir de la déformation de la surface de chaque carte, au repérage de la carte considérée, c'est-à-dire à la détermination de sa déformation par établissement d'une correspondance entre coordonnées numérisées et coordonnées géographiques, on stocke sur un support tampon, et en juxtaposant leurs portions utiles, les cartes numérisées, découpées et repérées, et

on mémorise sur un support d'archivage les informations du support tampon.

Certes, EP-A-0 141 508 enseignait un affichage de cartes. Toutefois, il visait plus précisément un procédé de gestion de cartes à différentes échelles, avec un générateur graphique appliquant un facteur d'échelle pour procéder au recouvrement des cartes. En fait, et surtout, il ne présentait pas l'ensemble des étapes du procédé de l'invention, à savoir l'ordonnancement, la numérotation, la rotation, la numérisation, le découpage, le repérage, la juxtaposition et le stockage des cartes.

De préférence, le support d'archivage est un disque optique numérique à lecture laser rapide et de très grande capacité.

Dans la mise en oeuvre préférée du procédé de l'invention, on stocke et juxtapose une carte sur le support tampon en superposant un point de la carte de coordonnées géographiques déterminées et un point de la portion de la zone échelle déjà stockée de mêmes coordonnées géographiques et dont les pixels sont prioritaires sur ceux de ladite carte à stocker, les portions de la carte à stocker, déjà contenues dans la portion de la zone échelle déjà stockée, étant ainsi effacées.

En d'autres termes, des parties de la carte élémentaire, qui, après superposition des deux points considérés, se seraient superposées à des parties de la zone échelle déjà stockées, sont en fait effacées. On conçoit ainsi l'intérêt du découpage des cartes élémentaires, pour que des parties blanches ou inutiles de cartes ne deviennent pas prioritaires sur des parties utiles d'autres cartes.

De préférence encore, après stockage et juxtaposition des cartes, on quadrille la zone échelle en pavés destinés à couvrir la surface d'un écran de visualisation, eux-mêmes quadrillés en pavés élémentaires numérotés.

L'invention concerne également le procédé de lecture du support d'archivage enregistré conformément au procédé d'archivage de l'invention, caractérisé par le fait qu'on détermine, par les références géographiques de son contour, la carte contenant un point de coordonnées géographiques déterminées à placer au centre d'un écran de visualisation.

De préférence, la zone échelle archivée ayant été quadrillée en pavés élémentaires, après avoir déterminé la carte contenant ledit point, on détermine le pavé élémentaire du support d'archivage, à afficher au centre de l'écran, et contenant ledit point, on lit le pavé écran au centre duquel se trouve ledit pavé élémentaire, et on l'affiche sur l'écran de visualisation.

L'invention sera mieux comprise à l'aide de la description suivante d'une mise en oeuvre préférée du procédé d'archivage et du procédé de lecture de l'invention, en référence aux dessins annexés, sur lesquels,

- la figure 1 illustre la mise en ordre des cartes élémentaires d'une zone échelle ;
- la figure 2 illustre la rotation d'une carte élémentaire avant sa numérisation;
- la figure 3 illustre le stockage d'une carte élémentaire et sa juxtaposition à une portion de zone échelle;
- la figure 4 représente la matrice des pavés élémentaires des pixels numérisés des cartes d'une zone échelle;
- la figure 5 représente l'organigramme des différentes étapes du procédé d'archivage de l'invention, et
- la figure 6 représente l'organigramme des différentes étapes du procédé de lecture de l'invention.

A. Enregistrement

Soit donc un fichier de cartes géographiques à archiver, des cartes élémentaires à une même échelle déterminée, et couvrant, à cette échelle une zone particulière dite zone échelle, par exemple la France. L'archivage de ces cartes sur un disque optique numérique revient à les enregistrer, ou les écrire, sur le disque suivant un procédé dont les étapes vont être analysées. D'ores et déjà, il faut noter que l'enregistrement s'effectue zone échelle par zone échelle.

1°) Mise en ordre des cartes et maillage

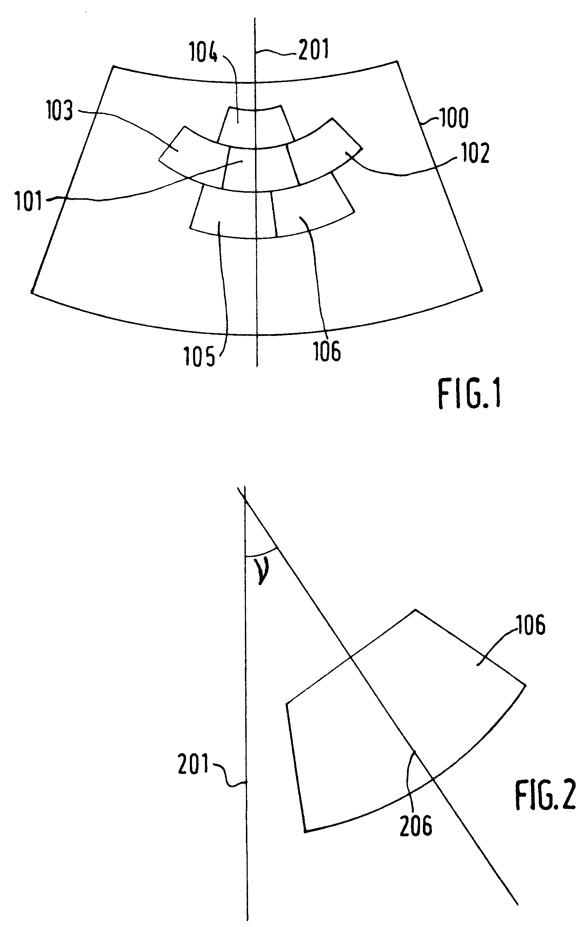

En référence à la figure 1, on prend la carte centrale 101, au sens géométrique du terme, de la zone échelle 100 et on pose que son méridien central 201 sera le méridien de référence de la zone échelle qui, au moment de la lecture ultérieure sur écran, sera affiché en position verticale. En d'autres termes, l'angle de numérisation de cette carte centrale 101 sera pris égal à zéro. Cette carte centrale 101 est affectée du numéro d'ordre 1. Disposant les cartes élémentaires les unes à côté des autres pour constituer la zone échelle, on affecte à la carte 102 adjacente à la carte n° 1, à l'est de celle-ci le numéro 2; la carte 103 adjacente à la carte n° 1 à l'ouest de celle-ci reçoit le numéro 3; la carte 104 adjacente à la carte centrale, au nord de celle-ci, reçoit le numéro 4, la carte 105 adjacente à la carte centrale, au sud de celle-ci, le numéro 5, et ainsi de suite, d'est en ouest et du nord au sud de la carte centrale n° 1 vers la périphérie de la zone échelle. Quand plusieurs cartes 105, 106 sont adjacentes à une autre, d'un même côté, la numérotation s'effectue dans le sens inverse des aiguilles d'une montre.

Ensuite, on procède au maillage de la zone échelle, en latitude et longitude, pour la découper en un certain nombre de mailles, afin de réduire la recherche des cartes à afficher, lors de la lecture ultérieure. A titre d'exemple, on peut choisir des mailles telles qu'elles ne contiennent pas plus de neuf cartes élémentaires chacune.

2°) Rotation des cartes

La rotation des cartes précède leur numérisation et consiste donc à déterminer leur angle de numérisation $\nu$.

En fait, dans la pratique, et en référence à la figure 2, l'angle de numérisation $\nu$ , et non l'angle $\gamma$ introduit plus haut à titre explicatif seulement, est l'angle formé entre le méridien de référence 201 de la zone échelle et le méridien central des cartes, par exemple le méridien 206 de la carte 106. Dans ces conditions, il est indifférent qu'on considère, pour la juxtaposition des cartes abordée plus loin, des cartes adjacentes par leurs méridiens ou par leurs parallèles.

L'angle de numérisation $\nu$ d'une carte dépend de

. la latitude L et la longitude G du point central de la carte, et par lequel passe son méridien central,

. les caractéristiques de l'ellipsoïde auquel on a assimilé la terre pour l'élaboration de la carte,

. le type de projection adoptée pour l'élaboration de la carte, qui peut être une projection conique, cylindrique ou azimuthale, de Mercator ou de Lambert, par exemple.

L'ouvrage Géodesie classique bidimentionnelle - Tome 2, de Levallois, Eyrolles, 1970, fournit les éléments permettant de déterminer les angles de numérisation $\nu$ associés aux cartes de la zone échelle.

3°) Numérisation des cartes

Elle s'effectue à l'aide d'un système de balayage du type scanner. Chaque carte est disposée sur le cadre du système, plat ou rotatif, mais inclinée de son angle de numérisation et est éclairé par une source de lumière. La tête de lecture balaye la carte inclinée, pixel par pixel, et ligne de pixels par ligne de pixels, et analyse la lumière réfléchie, qui est décomposée dans les trois couleurs primaires, rouge, vert, bleu, par un dispositif optique. Les informations recueillies sont numérisées et stockées sur tout support approprié, par exemple une bande magnétique.

La numérisation des cartes peut être effectuée, par exemple à l'aide d'un scanner de la Société Hell, présenté dans le n° 1150, de décembre 1984, de la revue L'Industrie Textile.

Avant l'opération de balayage proprement dite, l'opérateur procède au balayage des portions de la carte de couleurs respectivement différentes ($C_1$, $C_2$, ...), dans un ordre déterminé, qu'il veut prendre en compte, pour déterminer les paramètres colorimétriques de ces couleurs, ici au nombre de douze, et former ainsi la table de ces couleurs. C'est l'opération d'échantillonnage évoquée ci-dessus. Les informations numériques de la bande de stockage sont d'une part, les numéros des couleurs de tous les pixels analysés et, d'autre part, pour son traitement ultérieur lors de la lecture du disque optique, la table des couleurs, avec leurs paramètres colorimétriques.

4°) Découpage des cartes

On a déjà vu qu'il s'agissait pour cela, d'affecter aux pixels à éliminer la couleur zéro ($C_o$). En pratique, cela se traduira par l'association à chaque pixel concerné d'une information selon laquelle, au cours du stockage et de la juxtaposition des cartes, le pixel devra être effacé.

Cette étape du procédé s'effectue en ressortant sur un moniteur les informations numérisées du scanner et, à l'aide d'un curseur, suivre sur le moniteur les contours des portions à découper, pour substituer la couleur $C_o$ aux couleurs $C_1$-$C_n$ associées aux pixels contenus à l'intérieur de ces contours.

5°) Repérage des cartes

Le repérage d'une carte élémentaire vise, outre à définir les coordonnées des contours à stocker, à s'affranchir des déformations du papier de la carte, dues à la température, la pression, l'humidité, ... etc., et établir une correspondance entre les coordonnées numérisées et les coordonnées géographiques.

En fait, l'opération de repérage consiste à déterminer la déformation, ou le gondolage, du papier de la carte, par un facteur dit facteur de déformation, pour en tenir compte ultérieurement au moment de la juxtaposition des cartes, et de la lecture du disque d'archivage, alors qu'on procède à la numérisation et à l'archivage de la carte dans son état déformé.

Dans cette étape du procédé d'archivage, on suppose que les cartes ont subi une déformation rectiligne le long d'un premier axe et une autre déformation rectiligne le long d'un deuxième axe

4

perpendiculaire au premier, les deux déformations n'étant toutefois pas corrélées entre elles.

On procède de la manière suivante.

On fait ressortir les informations numérisées du support de numérisation sur un moniteur pour afficher la carte à repérer sur l'écran du moniteur. A l'aide d'un curseur, on désigne sur l'écran deux points géodésiques particuliers de la carte, de latitudes et longitudes respectives, connues, $L_1$, $G_1$ et $L_2$, $G_2$. Ces coordonnées géographiques correspondent à deux pixels numérisés du support de coordonnées matricielles respectives $x_1$, $y_1$ et $x_2$, $y_2$ dans la matrice des pixels XY associée à la carte considérée.

Si on considère par exemple $(x_2-x_1)$, c'est le nombre de colonnes, dans la matrice de pixels associée à la carte, séparant les deux points géodésiques désignés. Du fait de la déformation du papier, ce nombre est faux. Mais connaissant les coordonnées géographiques vraies des deux points, on peut en déduire le décalage de colonnes théorique $(X_2-X_1)$. En fonction de ces deux nombres, l'un faux, l'autre exact et théorique, des coordonnées géographiques des deux points, des caractéristiques de l'ellipsoïde terrestre et du type de projection de la carte et de l'angle de numérisation, l'ouvrage de Levallois abordé ci-dessus, fournit les éléments permettant encore de calculer le facteur de déformation attaché à la carte, et qui est mémorisé en combinaison avec les informations numérisées de celle-ci, sur un support de numérisation et de repérage, avec également les coordonnées géographiques et matricielles des sommets du polygone géométrique contenant les informations géographiques de la carte.

### 6°) Stockage et juxtaposition des cartes

Les cartes ayant été numérisées, avec leurs angles de numérisation respectifs, découpées et repérées, on les juxtapose, ou on les "colle" sur un support tampon, pouvant être un disque optique.

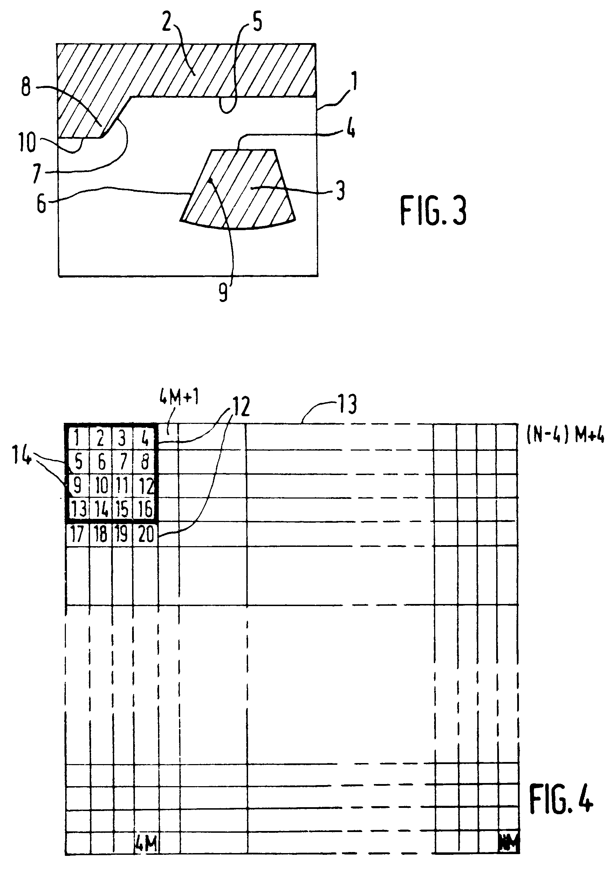

Pour cela et en affichant les informations du support de numérisation et de repérage sur l'écran 1 d'un moniteur, en référence à la figure 3, on fait apparaitre l'ensemble des informations déjà juxtaposées de la zone 2 et celles de la carte à lui adjoindre 3, le bord supérieur 4 de la carte 3 devant s'étendre le long de la portion de bord inférieure 5 de la zone 2 et le bord gauche incliné 6 de la carte 3 légèrement en deça de la portion de bord inclinée 7 de la zone 2. L'opérateur, à l'aide d'un curseur, désigne successivement un point 8 de la zone 2 et un point origine 9 de la carte 3, de mêmes coordonnées géographiques que le point 8. Il est ensuite procédé au calcul des différences des coordonnées matricielles des deux points 8, 9 tels qu'ils apparaissent à l'écran, avant que la carte 3 ne soit ensuite déplacée vers, et en partie sous la zone 2. Les portions de la zone 2 sont prioritaires sur celles de la carte 3, si bien que la carte 3 vient se juxtaposer parfaitement à la zone 2, les portions de la carte 3 déjà contenues dans la zone 2 étant purement et simplement effacées.

Dans le cas considéré, on conçoit facilement que si une portion inutile de la carte 3 était restée au-dessus du bord 4, cette portion aurait été effacée. Par contre, une portion inutile de la carte 3, à gauche du bord 6, aurait pu se placer en-dessous de la portion de bord 10 de la zone 2 et devenir ainsi malencontreusement prioritaire sur des informations d'autres cartes à juxtaposer.

Une fois une carte juxtaposée, elle perd son identité.

Les cartes sont juxtaposées dans l'ordre de la numérotation élaborée au cours de l'étape de mise en ordre précédente, le méridien de référence de la zone échelle devant toujours ressortir en position verticale sur un écran de visualisation.

On notera que les zones échelle ne sont pas juxtaposées les unes aux autres. Pour cette raison, on prévoit, pour chaque zone échelle, des bandes périphériques de recouvrement, pour s'assurer qu'il apparaitra toujours sur un écran de lecture une portion d'une zone échelle.

### 7°) Carroyage des zones échelle

Le carroyage, ou quadrillage, vise à accélérer la lecture ultérieure des informations archivées en les faisant ressortir carreau par carreau, ou pavé par pavé.

Une zone échelle étant donc mémorisée, sur le support tampon sous forme d'une matrice de pixels représentés, chacun, par leur information de couleur, c'est-à-dire leur numéro de couleur, soit un nombre de bits dépendant du nombre de couleurs retenu (4 bits pour 12 couleurs), pour tenir compte des capacités des écrans des moniteurs de visualisation, on découpe la matrice de la zone échelle en pavés élémentaires, ici de 256 lignes et 256 colonnes de pixels, qu'on regroupe ici encore 16 par 16 en pavés d'ensemble formés, chacun, de 4 lignes et 4 colonnes de pavés élémentaires, un pavé d'ensemble pouvant couvrir la surface d'un écran de visualisation.

On procède ensuite à la numérotation des pavés élémentaires découpés de la manière exposée ci-dessous. Cette numérotation des pavés élémentaires d'un pavé écran 12 d'une zone échelle 13, en référence à la figure 4, s'effectue pavé élémentaire 14 par pavé élémentaire 14 dans l'ordre croissant des colonnes de pavés élémentaires jusqu'à 4, puis dans l'ordre croissant des lignes de pavés élémentaires jusqu'à 4, et pavé écran par pavé écran dans l'ordre croissant des lignes de pavés écran jusqu'à la dernière ligne de la matrice de pixels, puis dans l'ordre croissant des colonnes de pavés écran jusqu'à la dernière colonne de la matrice de pixels.

Dans le cas d'une matrice de zone échelle de 256 M lignes et 256 N colonnes de pixels, c'est-à-dire d'une zone échelle découpée en N colonnes de pavés élémentaires et M lignes de pavés élémentaires, la numérotation de la première ligne de pavés élémentaires 12 est

1, 2, 3, 4, 4M + 1, 4M + 2,     (N-4)M + 3, (N-4)M + 4,

de la seconde ligne

5, 6, 7, 8, 4M + 5, 4M + 6,     (N-4)M + 7, (N-4)M + 8,

de la dernière ligne

4M-3, 4M-2,     (N-4)M + 4M-1, (N-4)M + 4M

soit

4M-3, 4M-2,     NM-1, NM.

8°) <u>Compression des informations</u>

En fait, et avant d'archiver chaque zone échelle sur un disque optique numérique, on procède à une compression des informations, selon un codage qui va maintenant être analysé. On procède pavé élémentaire par pavé élémentaire et, pour chaque pavé élémentaire, quart de pavé élémentaire par quart de pavé élémentaire, c'est-à-dire par groupe de 64 lignes de pixels.

On compte, dans chacun de ces groupes, le nombre de pixels $N_i$ associés à chacune $C_i$ des couleurs retenues, douze en l'occurrence, avec

$N_1 > N_2 > ... > N_{11} > N_{12}$.

A la couleur la plus fréquente $C_1$, on affecte un bit de valeur 0.

Selon le codage de Huffman, que l'invention perfectionne comme cela sera exposé plus loin (voir document "Digital Image Processing", de Rafael et al. Addison-Wesley, 1977), on affecte à la deuxième couleur $C_2$ la plus fréquente, après $C_1$, un deuxième bit, de poids immédiatement supérieur, de valeur 1, et ainsi de suite. Ainsi, à la couleur $C_i$ de rang i est affecté le code composé de (i-1) bits de valeur 1 et un dernier bit de poids le plus faible de valeur 0.

Le codage de Huffman est toutefois trop dégradant.

Selon l'invention, on affecte à la deuxième couleur $C_2$ la plus fréquente, après $C_1$, un deuxième bit, de poids immédiatement supérieur, de valeur 1, et un troisième bit, de poids immédiatement inférieur, et donc le plus faible, de valeur x, x étant égal à 1 si le pixel suivant est de la même couleur, comme dans un codage RLC (run length coding).

Pour déjà comparer le codage de Huffman et celui de l'invention, au niveau de cette deuxième couleur, notons que, selon le codage Huffman, l'archivage de deux pixels adjacents de cette même couleur $C_2$ requiert 4 bits - deux fois 10 -, alors que, selon le codage de l'invention, 3 bits - 101 - sont suffisants.

Selon le codage de Huffman, l'archivage de deux pixels adjacents, dont l'un est de couleur $C_2$, ne requiert que 3 bits, seulement si l'autre pixel est de couleur $C_1$. Comme la probabilité que deux pixels adjacents soient de même couleur, est supérieure à 0,5, statistiquement, on conçoit donc que le codage de l'invention, au niveau de ces deux couleurs, soit déjà plus performant.

Un pixel en suit un autre suivant un sens de balayage de la gauche vers la droite de chacune des 64 lignes de 256 pixels de chaque quart de pavé élémentaire.

Pour revenir au codage de l'invention, on notera tout d'abord qu'il repose sur le fait que la fréquence d'apparition des trois couleurs suivantes $C_3$, $C_4$, $C_5$ est sensiblement la même et que le codage de ces trois couleurs s'effectue donc avec le même nombre de bits. Il fallait donc, le chiffre décimal 3 s'écrivant 11 en binaire, deux bits de plus que pour la couleur $C_2$.

6

Comme les pixels archivés sont analysés les uns à la suite des autres, sans séparateur entre eux, il fallait également éliminer toute ambiguité au cours de la lecture ultérieure s'effectuant depuis le premier pixel. Et c'est ainsi qu'il est proposé le codage suivant :

| | |
|---|---|
| $c_1$ | O |
| $c_2$ | 1 O x |
| $c_3$ | 1 1 O O x |
| $c_4$ | 1 1 O 1 x |
| $c_5$ | 1 1 1 O x |
| $c_6$ | 1 O O 1 O 1 x |
| $c_7$ | 1 1 1 1 O O x |
| $c_8$ | 1 1 1 1 O 1 x |
| $c_9$ | 1 1 1 1 1 O x |
| $c_{10}$ | 1 1 1 1 1 1 O O |
| $c_{11}$ | 1 1 1 1 1 1 O 1 |
| $c_{12}$ | 1 1 1 1 1 1 1 O |

On prévoit également un code FIN s'écrivant 1 1 1 1 1 1 1 1.

Les bits x de poids le plus faible des couleurs $C_3$-$C_9$, tout comme pour $C_2$, sont égaux à 1 si le pixel suivant est de la même couleur, à 0 dans le cas contraire.

On remarquera que trois pixels de même couleur $C_2$ peuvent être archivés soit 101100, soit 100 101. Selon le codage de l'invention, on a volontairement écarté la deuxième possibilité qu'on a ainsi réservée à la couleur $C_6$.

En définitive, le codage de l'invention est une combinaison du codage de Huffman et du codage RLC, mais, de surcroit, adapté à la statistique des couleurs de l'image.

A titre d'exemple, on notera que dans l'exemple considéré, la proportion des pixels de couleur $C_1$ est d'environ 45 %, des pixels de couleur $C_2$, d'environ 20 %, des pixels de couleurs $C_3$, $C_4$, $C_5$, d'environ 8 % chacun, des pixels de couleur $C_6$-$C_9$, considérés globalement, d'environ 10 %, ces derniers pixels étant codés, selon le codage de l'invention, avec le même nombre de bits.

Avant codage, il fallait donc 4 bits par pixel; après codage, on a constaté que la quantité de bits à archiver était de 2,25 par pixel.

L'enregistrement du disque optique numérique s'effectue donc quart de pavé élémentaire par quart de pavé élémentaire et pavé élémentaire par pavé élémentaire, dans l'ordre de numérotation du carroyage.

On notera que les codes de compression ne sont pas associés aux pixels des quarts de pavé élémentaire sur le support d'archivage mais que ces codes sont mémorisés dans l'équipement de lecture.

9°) Enregistrement du disque optique numérique

Il ne reste plus ensuite qu'à procéder, de façon classique, à l'enregistrement sur le disque optique numérique des informations obtenues, c'est-à-dire à y inscrire les informations des cartes, d'une ou plusieurs zones échelle, mises en ordre, numérisées, découpées, repérées mais déformées, juxtaposées, quadrillées et comprimées.

Comme le disque optique est découpé en une suite continue de plages, il contient également un tableau de concordance des plages et des pavés des carroyages des zones échelle.

En combinaison avec les informations de chaque carte élémentaire sont enregistrées les références géographiques de celle-ci, à savoir :

. les coordonnées géographiques (latitude L et longitude G) et les coordonnées matricielles XY du point origine de la carte ayant servi à son repérage,

. les coordonnées géographiques L, G et les coordonnées matricielles X, Y des sommets du polygone contenant la carte,

. l'angle de numérisation,

. le facteur de déformation,

. les caractéristiques de l'éllipsoïde terrestre,

. le type de projection,

. la table des couleurs.

En combinaison avec les informations de chaque zone échelle, sont enregistrées :

. l'échelle,

. le numéro de la plage ou des plages dans lesquelles se trouve la zone échelle numérisée,

. le nombre de cartes élémentaires dans la zone échelle,

. les emplacements des références géographiques des cartes,

. les coordonnées géographiques et les coordonnées matricielles des sommets du polygone contenant la zone échelle,

. les pas, en latitude et longitude, des mailles.

Enfin, on enregistre dans les deux premières plages du disque d'archivage, la couverture en latitude et en longitude de la zone archivée, le nombre de zones échelle enregistrées, les emplacements des différentes zones échelle.

B. Lecture

Le procédé d'enregistrement d'un disque optique numérique d'archivage de cartes géographiques ayant été décrit ci-dessus, abordons maintenant le procédé de lecture de ce disque, c'est-à-dire l'affichage des cartes.

L'affichage consiste à placer, au centre de l'écran d'un moniteur de lecture, un point de latitude L et longitude G déterminées d'une carte élémentaire d'une zone échelle archivée, et qu'on veut regarder.

Le point à centrer sur l'écran étant connu en latitude et longitude, c'est-à-dire par ses coordonnées géographiques, on en déduit la maille de la zone échelle dans laquelle il se trouve, et, par conséquent, les cartes élémentaires se trouvant en tout ou partie dans la maille considérée.

Les contours des cartes élémentaires étant également connus, par leurs références géographiques, on en déduit la carte qui contient le point en question, le problème d'un éventuel recouvrement ayant été résolu lors de la sélection de la zone échelle.

Aux coordonnées géographiques (L, G) du point de la carte correspondent ses coordonnées matricielles (X, Y). On en déduit donc le numéro de pavé élémentaire à afficher au centre de l'écran. On en déduit le numéro du pavé élémentaire devant être affiché dans le coin supérieur gauche. Après un court traitement, il ne restera plus qu'à afficher les seize pavés élémentaires du pavé écran à afficher, suivant l'ordre de leur numérotation établi lors du carroyage des zones échelle du procédé d'enregistrement.

Dès qu'un pavé écran destiné à être affiché a été isolé, il est lu, décomprimé puis affiché; ce processus se déroule en fait en trois temps, et pendant qu'un pavé écran est décomprimé, le pavé écran suivant est lu et le pavé écran précédent est affiché. L'affichage peut être effectué sur tout dispositif, il peut s'agir, donc, d'un écran de moniteur, mais aussi d'une mosaïque de cristaux liquides, et même d'un support en papier.

Une fois un pavé écran affiché, on peut se déplacer sur la zone échelle de la carte affichée et changer de zone échelle, par décalage d'une ligne ou d'une colonne de pavés élémentaires, c'est-à-dire par quart de pavé écran; il est également possible de procéder à des incrustations sur l'écran d'affichage d'une portion de pavé écran, par exemple d'un groupe de quatre pavés élémentaires, pour représenter une portion de la zone précédemment affichée à une autre échelle, si les cartes correspondantes ont bien été archivées.

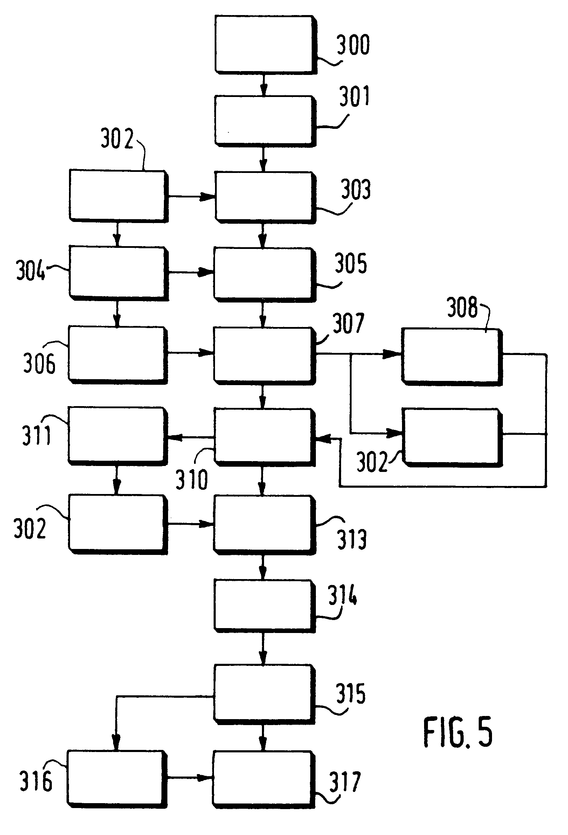

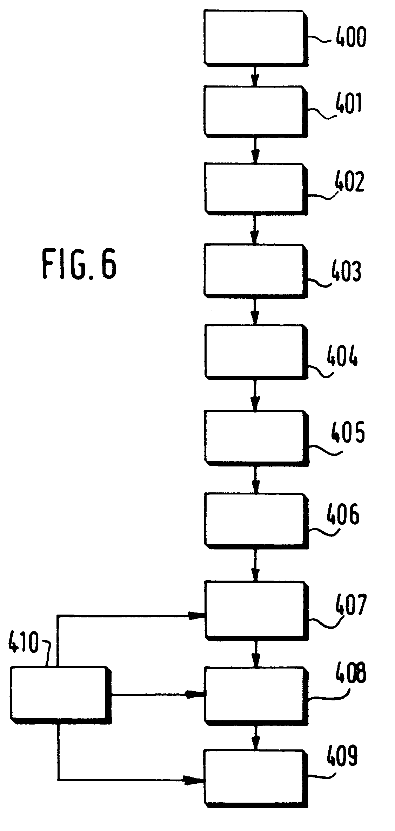

En définitive, l'organigramme de la figure 5 représente les différentes étapes du procédé d'archivage et donc d'enregistrement du disque optique, celui de la figure 6, celle du procédé de lecture du disque optique.

En ce qui concerne l'enregistrement, disposant d'un fichier de cartes 300, on procède en 301 à leur mise en ordre. Grâce à un premier algorithme, un calculateur 302, par exemple du type HP 1000-A900 de la Société Hewlett Packard, détermine en 303 les angles de numérisation $\nu$ des cartes et le maillage. A l'aide d'un scanner 304, on numérise en 305 les cartes. En ressortant, à l'aide du calculateur 302, les

8

informations du scanner 304 sur l'écran d'un moniteur 306, l'opérateur initie en 307 le découpage des portions inutiles des cartes. A l'aide d'un moniteur 308 et d'un deuxième algorithme, le calculateur 302 détermine en 310 les facteurs de déformation des cartes. A l'aide d'un moniteur 311 et du calculateur 302, l'opérateur initie en 313 le stockage et la juxtaposition des cartes sur un disque tampon. On quadrille ensuite, en 314, les zones échelles, puis, en 315, dans un module de compression, on comprime les informations associées aux pixels numérisées selon un algorithme de compression par exemple celui analysé ci-dessus. Puis à l'aide d'un équipment d'enregistrement 316, à laser, ici du type LD 1200 de la Société OSI/CDC, on enregistre en 317 le disque optique numérique d'archivage. L'ensemble des étapes du procédé d'enregistrement peut s'effectuer à l'aide du calculateur HP 1000 A900.

En ce qui concerne la lecture du disque 400 obtenu en 317 du procédé d'enregistrement, et après sa lecture dans le même appareil à laser évoqué ci-dessus, on procède d'abord en 401 à la détermination de la zone échelle. Puis on détermine en 402 la maille contenant le point à placer au centre d'un écran de visualisation 408, avant de déterminer en 403 les cartes contenues en tout ou partie dans la maille. On détermine ensuite en 404, par son contour, la carte contenant ce point, on détermine en 405, à l'aide d'un module de préparation d'affichage, le pavé élémentaire contenant ce point et, en 406 le pavé écran correspondant. On le lit à l'aide d'un module 407 de lecture de pavés. On le décomprime ensuite, dans un module 408 de décompression de pavés, suivant l'algorithme de décompression correspondant à l'algorithme de compression, avant, à l'aide d'un module d'affichage 409, de l'afficher sur l'écran. Le démarrage des modules de lecture, de décompression et d'affichage est commandé par un module séquenceur 410. La lecture peut s'effectuer à l'aide d'un calculateur par exemple du type HP 1000 A900 de la Société Hewlett Packard.

**Revendications**

1. Procédé d'archivage de cartes géographiques recouvrant au moins une zone échelle déterminée, caractérisé par le fait que, successivement, on ordonne les cartes (102-106), en les disposant les unes à côté des autres, pour constituer la zone échelle, et en les numérotant, on fait tourner chaque carte d'un angle dit de numérisation (201,206) formé entre un méridien de référence de la zone échelle et le méridien central de la carte considérée,

   on numérise les pixels de chaque carte ainsi ordonnée et tournée,

   on découpe, de chaque carte, les portions inutiles,

   on procède, pour s'affranchir de la déformation de la surface de chaque carte, au repérage de la carte considérée, c'est-à-dire à la détermination de sa déformation par établissement d'une correspondance entre coordonnées numérisées et coordonnées géographiques,

   on stocke sur un support tampon, et en juxtaposant leurs portions utiles, les cartes (3) numérisées, découpées et repérées, et

   on mémorise sur un support d'archivage les informations du support tampon.

2. Procédé d'archivage selon la revendication 1, dans lequel la numérisation des cartes s'effectue à l'aide d'un scanner.

3. Procédé d'archivage selon l'une des revendications 1 et 2, dans lequel la numérisation des cartes s'effectue en formant une table de paramètres colorimétriques de couleurs à prendre en compte et en associant, à chaque pixel des cartes, un desdits paramètres de la table.

4. Procédé d'archivage selon la revendication 3, dans lequel on découpe les portions inutiles de chaque carte en substituant aux paramètres colorimétriques associés aux pixels de ces portions inutiles le paramètre colorimétrique correspondant à la couleur zéro constituant ultérieurement une instruction d'effaçage.

5. Procédé d'archivage selon l'une des revendications 1 à 4, dans lequel on stocke et juxtapose une carte sur le support tampon en superposant un point (9) de la carte (3) de coordonnées géographiques déterminées et un point (8) de la portion (2) de la zone échelle déjà stockée de mêmes coordonnées géographiques et dont les pixels sont prioritaires sur ceux de ladite carte à stocker, les portions de la carte (3) à stocker, déjà contenues dans la portion (2) de la zone échelle déjà stockée, étant ainsi effacées.

EP 0 310 464 B1

**6.** Procédé d'archivage selon l'une des revendications 1 à 5, dans lequel, après stockage et juxtaposition des cartes, on quadrille la zone échelle (13) en pavés (12) destinés à couvrir la surface d'un écran de visualisation, eux-mêmes quadrillés en pavés élémentaires numérotés (14).

**7.** Procédé d'archivage selon l'une des revendications 1 à 6, dans lequel on comprime les informations du support tampon avant de les reporter sur le support d'archivage.

**8.** Procédé d'archivage selon l'une des revendications 1 à 7, dans lequel, sur le support d'archivage on associe aux cartes de la zone échelle ainsi qu'à celle-ci leurs références géographiques.

**9.** Procédé d'archivage selon l'une des revendications 1 à 8, dans lequel on archive les cartes en mémorisant les informations numériques qui leur correspondent sur un disque optique numérique.

**10.** Procédé d'archivage selon l'une des revendications 1 à 9, dans lequel, après avoir ordonné les cartes, on procède au maillage de la zone échelle en latitude et longitude.

**11.** Procédé de lecture du support d'archivage enregistré selon le procédé de l'une des revendications 1 à 10, caractérisé par le fait qu'on détermine, par les références géographiques de son contour, la carte contenant un point de coordonnées géographiques déterminées à placer au centre d'un écran de visualisation.

**12.** Procédé de lecture selon la revendication 11, dans lequel la zone échelle ayant été maillée en latitude et longitude, on procède tout d'abord à la détermination de la maille contenant un point de coordonnées géographiques déterminées à placer au centre d'un écran de visualisation.

**13.** Procédé de lecture selon l'une des revendications 11 et 12, dans lequel, la zone échelle archivée ayant été quadrillée en pavés élémentaires, après avoir déterminé la carte contenant ledit point, on détermine le pavé élémentaire du support d'archivage à afficher au centre de l'écran et contenant ledit point, on lit le pavé écran au centre duquel se trouve ledit pavé élémentaire,et on l'affiche sur ledit écran de visualisation.

**Claims**

**1.** Method of filing geographical maps covering at least a given scale zone. characterized by the fact that it comprises the successives steps of arranging, the maps 102-106 in a predetermined order by laying them out one nearby the other, to constitute the scale zone, and by numbering them ; turning each map through a so-called digitizing angle formed between a reference meridian of the scale zone and the central meridian of the related map. digitizing the picture elements of each map so arranged and turned. cuting out of each map. the useless portions. for each map, in order to obviate the deformation of the surface of each map. marking the related map, that is determining its deformation by establishing a correspondence between digitized coordinates and geographical coordinates, storing on a buffer medium and by juxtaposing their useful portions, the digitized, cut out and marked maps (3) and recording on a filing medium the information of the buffer medium.

**2.** Filing method according to claim 1, wherein the digitizing step is performed by means of a scanner.

**3.** Filing method according to one of claims 1 and 2, wherein the map digitizing step is performed by forming a table of colorimetical parameters of colors to be taken into account and associating with each pixel of the maps one of the said parameters of the table.

**4.** Filing method according to claim 3. wherein the useless portions of each map are cut out by substituting, for the colorimetical parameters associated with the pixels of these useless portions, the colorimetical parameter corresponding to the zero color constituting later on an erasing instruction.

**5.** Filing method according to one of claims 1 to 4, wherein storing and juxtaposing a map on the buffer medium are performed by superimposing a point (9) of the map (3), having determined geographical coordinates. and a point (8) of the portion (2) of the scale zone already stored having same geographical coordinates and whose pixels have a higher priority than those of said map to be stored,

10

the portions of the map (3) to be stored already contained within the portion (2) of the scale zone already stored, being thus erased.

6. Filing method according to one of claims 1 to 5, wherein, after storing and juxtaposing the maps, the scale zone (13) is cross-ruled into blocks (12) intended to cover the area of a display screen, themselves being cross-ruled into numbered elementary blocks (14).

7. Filing method according to one of claims 1 to 6, and further comprising the step of compressing the information of the buffer medium before recording it on the filing medium.

8. Filing method according to one of the claims 1 to 7, wherein, on the filing medium, the maps of the scale zone as well as the latter are associated with their geographical references.

9. Filing method according to one of claims 1 to 8, wherein the maps are filed by recording the digital information corresponding thereto on a digital optical disk.

10. Filing method according to one of claims 1 to 9, wherein, after arranging the maps in order, the scale zone is cross-ruled in longitude and latitude.

11. Method of reading a filing medium recorded according to one of claims 1 to 10. characterized by the fact that it comprises the step of determining, by the geographical references of its contour, the map containing a point with determined geographical coordinates to be placed in the center of a display screen.

12. Method of reading according to claim 11, and the scale zone having been cross-ruled in longitude and latitude. further comprising the step of first determining the block containing a point with determined geographical coordinates to be placed in the center of a display screen.

13. Method of reading according to one of claims 11 and 12, and the filed scale zone having been cross-ruled into elementary blocks. further comprising the step, after having determined the map containing said print, of determining the elementary block of the filing medium to be displayed in the center of the screen and containing said point. reading the screen block in the center of which is said elementary block and displaying it on said display screen.

**Patentansprüche**

1. Verfahren zur Archivierung von Landkarten, die mindestens eine bestimmte Maßstabszone abdecken, dadurch gekennzeichnet, daß man nacheinander die Karten (102-106) ordnet, indem man sie nebeneinander anordnet, um die Maßstabszone zu bilden, und indem man sie numeriert, man jede Karte um einen sogenannten Digitalisierungswinkel (201, 206) dreht, der zwischen einem Bezugsmeridian der Maßstabszone und dem Zentralmeridian der betreffenden Karte gebildet wird,
man die Pixel jeder so geordneten und gedrehten Karte digitalisiert,
man aus jeder Karte die unbrauchbaren Teile ausschneidet,
man, um die Verformungen der Oberfläche jeder Karten zu beseitigen, die Einpassung der betreffenden Karte vornimmt, daß heißt, die Bestimmung ihrer Verformung durch die Herstellung einer Übereinstimmung zwischen digitalisierten Koordinaten und geographischen Koordinaten,
man die digitalisierten, zugeschnittenen und eingepaßten Karten (3) auf einem Datenträger-Puffer speichert, wobei ihre brauchbaren Teile nebeneinandergelegt werden, und
man auf einem Archivierungs-Datenträger die Informationen des Datenträger-Puffers speichert.

2. Archivierungsverfahren nach Anspruch 1, bei dem die Digitalisierung der Karten mittels eines Scanners erfolgt.

3. Archivierungsverfahren nach einem der Ansprüche 1 und 2, bei dem die Digitalisierung der Karten erfolgt, indem eine Tabelle von kolorimetrischen Parametern von zu berücksichtigenden Farben erstellt wird und jedem Pixel der Karten einer dieser Parameter der Tabelle zugeordnet wird.

**4.** Archivierungsverfahren nach Anspruch 3, bei dem man die unbrauchbaren Teile jeder Karte ausschneidet, indem man an Stelle der den Pixeln dieser unbrauchbaren Teile zugehörigen kolorimetrischen Parameter den der Farbe Null entsprechenden kolorimetrischen Parameter einsetzt, der letztendlich einen Löschbefehl darstellt.

**5.** Archivierungsverfahren nach einem der Ansprüche 1 bis 4, bei dem man eine Karte auf dem Datenträger-Puffer speichert und anordnet, indem man einen Punkt (9) der Karte (3) mit bestimmten geographischen Koordinaten und einen Punkt (8) des bereits gespeicherten Teils (2) der Maßstabszone, der dieselben geographischen Koordinaten besitzt und dessen Pixel denjenigen der zu speichernden Karte übergeordnet sind, übereinanderlegt, wobei die Teile der zu speichernden Karte (3), die schon in dem bereits gespeicherten Teil (2) der Maßstabszone enthalten sind, so gelöscht werden.

**6.** Archivierungsverfahren nach einem der Ansprüche 1 bis 5, bei dem man nach Speicherung und Nebeneinanderlegen der Karten über die Maßstabszone (13) eine Gittereinteilung aus Feldern legt, welche die Fläche eines Bildschirms bedecken und ihrerseits in numerierte Elementarfelder (14) unterteilt sind.

**7.** Archivierungsverfahren nach einem der Ansprüche 1 bis 6, bei dem man die Informationen des Datenträger-Puffers vor ihrer Übertragung auf den Archivierungs-Datenträger komprimiert.

**8.** Archivierungsverfahren nach einem der Ansprüche 1 bis 7, bei dem man die Karten der Maßstabszone sowie diese selbst mit ihren geographischen Bezugsdaten verknüpft.

**9.** Archivierungsverfahren nach einem der Ansprüche 1 bis 8, bei dem man die Karten durch das Abspeichern der ihnen entsprechenden digitalisierten Informationen auf einer digitalen optischen Speicherplatte archiviert.

**10.** Archivierungsverfahren nach einem der Ansprüche 1 bis 9, bei dem man nach dem Ordnen der Karten die Maßstabszone mit einem Netz aus geographischen Breiten und Längen überzieht.

**11.** Verfahren zum Lesen des gemäß dem Verfahren eines der Ansprüche 1 bis 10 beschriebenen Archivierungs-Datenträgers, dadurch gekennzeichnet, daß man mittels der geographischen Bezugsdaten ihrer Kontur die Karte bestimmt, die einen Punkt mit bestimmten geographischen Koordinaten, welcher in der Mitte eines Bildschirmes angeordnet werden soll, enthält.

**12.** Leseverfahren nach Anspruch 11, wobei die Maßstabszone mit einem Netz aus geographischen Längen und Breiten überzogen ist, bei dem man zunächst die Netzmasche bestimmt, die einen Punkt mit bestimmten geographischen Koordinaten, welcher in der Mitte eines Bildschirmes angeordnet werden soll, enthält.

**13.** Leseverfahren nach einem der Ansprüche 11 und 12, wobei die archivierte Maßstabszone in Elementarfelder unterteilt ist bei dem man der Ermittlung der den besagten Punkt enthaltenden Karte das Elementarfeld des Archivierungs-Datenträgers bestimmt, das in der Mitte des Bildschirmes dargestellt werden soll und diesen Punkt enthält, man das Bildschirmfeld, in dessen Mitte sich das betreffende Elementarfeld befindet, einliest und es auf dem Bildschirm darstellt.

12

FIG.1

FIG.2

FIG.3

FIG.4

FIG. 5

FIG.6